**Europäisches Patentamt**

**European Patent Office**

**Office européen des brevets**

(19)

(11) Veröffentlichungsnummer: **0 233 596**
**B1**

(12)

# EUROPÄISCHE PATENTSCHRIFT

(45) Veröffentlichungstag der Patentschrift:
**04.10.89**

(21) Anmeldenummer: **87101968.3**

(22) Anmeldetag: **12.02.87**

(51) Int. Cl.⁴: **F16C 13/02, F16C 35/06**

(54) **Wellenzapfen mit Bajonettverschluss, insbesondere zum Festlegen des Innenzylinders einer hydraulischen Abziehvorrichtung für Walzenlager auf dem Walzenzapfen.**

(30) Priorität: **21.02.86 DE 3605615**

(43) Veröffentlichungstag der Anmeldung:
**26.08.87 Patentblatt 87/35**

(45) Bekanntmachung des Hinweises auf die Patenterteilung:
**04.10.89 Patentblatt 89/40**

(84) Benannte Vertragsstaaten:
**AT BE CH DE ES FR GB GR IT LI LU NL SE**

(56) Entgegenhaltungen:
**DE-A- 2 035 698**
**DE-C- 401 578**
**GB-A- 2 060 820**
**US-A- 3 627 388**
**US-A- 3 822 081**

(73) Patentinhaber: **SMS SCHLOEMANN-SIEMAG AKTIENGESELLSCHAFT,**
**Eduard-Schloemann-Strasse 4, D-4000 Düsseldorf 1(DE)**

(72) Erfinder: **Benfer, Ernst-Oskar, Sieg-Lahn-Strasse 14, D-5928 Bad Laasphe(DE)**
Erfinder: **Irle, Rolf-Gerd, Wiesenstrasse 1, D-5912 Hilchenbach(DE)**

(74) Vertreter: **Müller, Gerd et al, Patentanwälte HEMMERICH-MÜLLER-GROSSE-POLLMEIER-MEY Hammerstrasse 2, D-5900 Siegen 1(DE)**

## Beschreibung

Die Erfindung betrifft einen Wellezapfen mit Bajonettverschluß zum axialen Festlegen von Ringteilen auf dem Wellenzapfen, insbesondere zum Festlegen des Innenzylinders einer hydraulischen Abziehvorrichtung für Walzenlager auf dem Walzenzapfen.

Um einen Wellenzapfen für einen Bajonettverschluß herzurichten war es bisher erforderlich, den Zapfen mit einer Ringnut und das vorgelagerte Zapfenende mit umfangsverteilten Durchbrüchen zu versehen, um das drehbare Teil des Bajonettverschlusses, den Bajonettring, bis zur Ringnut aufschieben zu können (GB-A 2 060 820). Durch Drehen des Bajonettringes wird dann das auf dem Wellenzapfen befindliche Ringteil axial festgelegt bzw. gegen Anschlag verspannt. Wenn jedoch Wellenzapfen vorgegeben sind, die nur eine Ringnut haben und deren vorgelagertes Zapfenende aus einem geschlossenen Ringbund besteht, so wäre es nach dem Stand der Technik erforderlich, an dem geschlossenen Ringbund die umfangsverteilten Durchbrüche durch mechanische Bearbeitung herzustellen. Diese Nacharbeit ist beispielsweise erforderlich bei Walzenzapfenlagern mit hydraulischer Abziehvorrichtung nach der US-A 3 627 388, bei der die Ringnut am Ende des Walzenzapfens zur Aufnahme eines geteilten Spannringes dient. Wollte man ein derartiges Walzenzapfenlager mit einem Bajonettverschluß anstelle des geteilten Spannringes weiterbilden, müßte die Walze wie beschrieben am Walzenzapfenende einer kostenaufwendigen Änderung unterzogen werden.

Die DE-A 2 035 698 beschreibt ein Walzenzapfenlager mit hydraulischer Abziehvorrichtung, bei der der Innenzylinder bajonettartige Ausnehmungen bzw. Durchbrüche hat, um ihn durch Drehung axial festzulegen. Die radialen Stützstege des Walzenzapfens zur Abstützung des gedrehten Innenzylinders müssen durch Ausfräsen von Durchbrüchen am Walzenzapfen angeformt werden. Ferner zeigt diese Literaturstelle, wie auch die GB-A 2 060 820 einen Sicherungskeil zur Sicherung des Bajonettverschlusses.

Der Erfindung liegt die Aufgabe zugrunde, den Einsatz eines Bajonettverschlusses an Wellenzapfen, insbesondere Walzenzapfen zu ermöglichen, die nur mit einer Ringnut versehen sind.

Die Lösung dieser Aufgabe besteht gemäß der Erfindung darin, daß das feststehende, mit umfangsverteilt abwechselnden Durchbrüchen und Stützflächen versehene Stützteil des Bajonettverschlusses aus zwei durch Verbindungselemente, z.B. Schrauben, verbindbaren Stützringhälften besteht, die innere Ringbundhälften aufweisen, die in eine Ringnut des Wellenzapfens eingreifen, daß mindestens eine der Stützringhälften über eine Verdrehsicherung drehfest mit dem Wellenzapfen verbunden ist, und daß das festzulegende, mit korrespondierenden umfangsverteilt abwechselnden Stützflächen und Durchbrüchen versehene Ringteil das drehbare Teil des Bajonetverschlusses ist. Hierbei ersetzt der in der Ringnut axial festgelegte und undrehbare, zusammengesetzte Stützring das mit Durchbrüchen versehene Ende des Walzenzapfens mit der sogenannten "Kleeblattform". Da dieses Wellenzapfende gemäß der gestellten Aufgabe ein geschlossener Ringbund sein soll, ist der Stützring wegen seiner Mehrteiligkeit dennoch in der vorhandenen Ringnut zu montieren. Um den Bajonettverschluß zu vollenden, ist es lediglich erforderlich, das auf dem Wellenzapfen festzulegende Ringteil mit nach innengerichteten, d.h. korrespondierenden umfangsverteilt abwechselnden Stützflächen und Durchbrüchen zu versehen, um es über den montierten feststehenden Stützring zu schieben und durch Drehen im Sinne eines Bajonettverschlusses festzulegen.

Die Teilungsebene des zusammengesetzten Stützringes verläuft weckmäßig durch zwei diametral gegenüberliegende, zwischen Durchbrüchen angeordneten Stützflächen, um aus Platzgründen das hier vorhandene "Fleisch" auszunutzen. Ferner ist es von Vorteil. wenn die Stützflächen eine größere axiale Abmessung haben als die Ringbundhälften des Stützringes, so daß der Stützring außerhalb der wellenseitigen Ringnut den glatten Umfang des Ringbundes am Wellenzapfenende übergreift und hier eine Abstützung findet, denn der Innenradius der umfangverteilten Stützfläche entspricht notwendigerweise dem Radius dieses Ringbundes.

Um das Schließen und Öffnen sowie das Abziehen des festzulegenden, drehbaren Ringteiles zu erleichtern, ist gemäß der weiteren Erfindung in dem festzulegenden Ringteil zugeordneten Bereich des Wellenzapfens mindestens ein radialer Anschlagstift eingesetzt, der einem der Durchbrüche des drehbaren Teils des Bajonettverschlusses lagemäßig zugeordnet ist derart, daß der von der Anzahl der vorgesehenen korrespondierenden Durchbruch und Stützflächen abhängige Verstellwinkel des drehbaren Teiles begrenzt ist

In der Zeichnung ist ein Ausführungsbeispiel des Erfindungsgegenstandes zum Festlegen des Innenzylinders einer hydraulischen Abziehvorrichtung für Walzenlager auf dem Walzenzapfen dargestellt, und zwar zeigen

Fig. 1 eine axiale Ansicht auf den Walzenzapfen mit dem Bajonettverschluß in Verriegelungsstellung, und
Fig. 2 einen Schnitt im wesentlichen nach der Linie II–II in Fig. 1.

Vorgegeben sei eine Walze 1 eines Walzgerüstes, die zwischen dem Walzenzapfen 2 und dem geschlossenen Ringbund 3 am Walzenzapfenende eine Ringnut 4 aufweist, die bei bekannten Konstruktionen von Walzenlagern zur Aufnahme eines geteilten Spannringes dient. Es geht darum, den Innenzylinder 5 einer hydraulischen Abziehvorrichtung, dem ein Ringkolben 16 zugeordnet ist, ohne Nacharbeit am geschlossenen Ringbund 3 durch einen Bajonettverschluß auf dem Walzenzapfen 2 axial festzulegen bzw. festzuspannen. Der Innenzylinder 5 ist üblicherweise mit einem Außengewinde versehen, auf den ein Spannring 7 aufgeschraubt werden kann. Dieser Spannring 7 ist mit umfangsverteilten Bohrungen 7a zum Ansetzen eines Hakenschlüssels versehen, um den Spannring 7 gegen den Ringkolben 16 festziehen zu können. Einzelheiten über das Zusammenwirken von Innenzylinder 5, Ringkolben 16 und Spannring 7 brauchen im gegebenen Zusammenhang nicht näher erläutert zu werden, da bekannt.

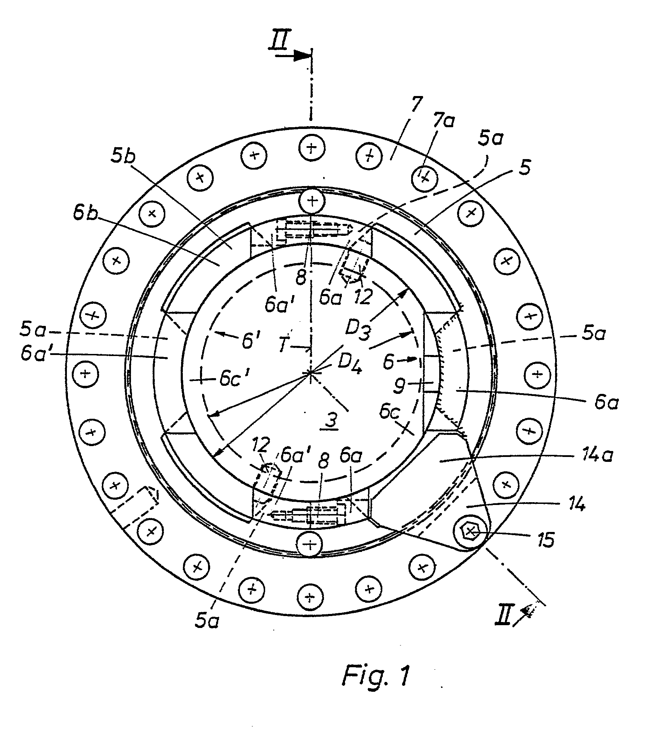

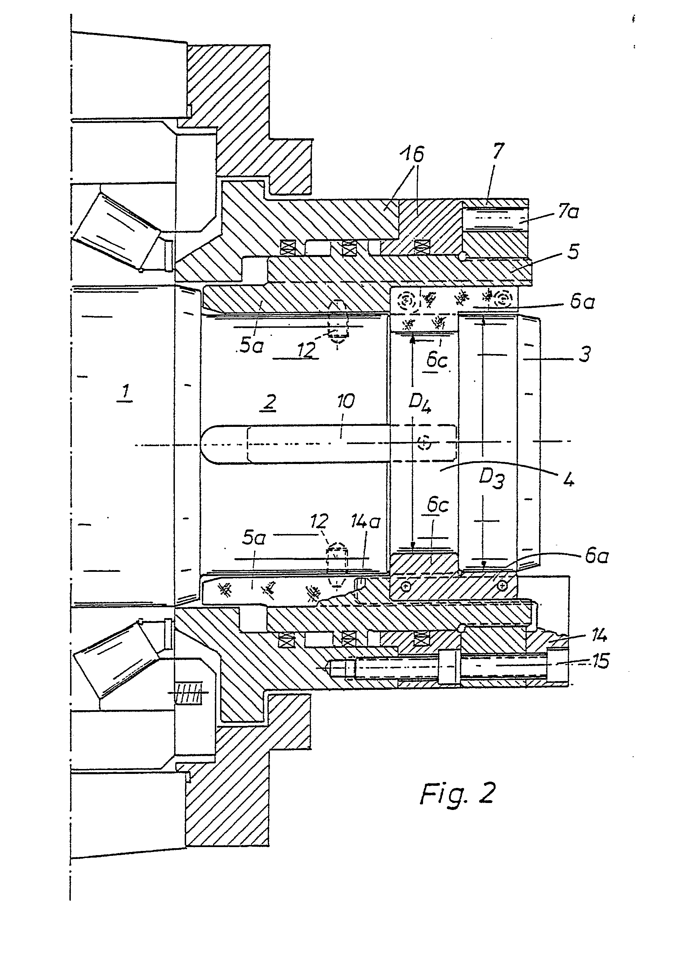

Die innere Ringbundhälfte 6c der Stützringhälfte 6 hat eine Nut 9 (Fig. 1), in die eine wellenseitige Paßfeder 10 (Fig. 2) auf dem Teil ihrer Länge eingreift, der sich über die Breite der Ringnut 4 erstreckt. Hierdurch ist der Stützring 6, 6' auf dem Walzenzapfen 2 undrehbar festgelegt. Die drehsichere Festlegung des Stützringes 6 auf dem Walzenzapfen kann auch durch anderes gestaltete Verdrehsicherungen bewirkt werden.

Wie aus der Fig. 2 hervorgeht, erstrecken sich die Stützflächen 6a (und natürlich auch die Stützflächen 6a') bis über die äußere Mantelfläche des Ringbundes 3 des Walzenzapfens 2, der einen Außendurchmesser D₃ hat. Diese Stützflächen haben somit eine größere axiale Abmessung als die Ringbundhälften 6c, 6hc'.

Auf dem festzulegenden Innenzylinder 5 zugeordneten Bereich des Walzenzapfens 2 sind zwei radiale Anschlagstifte 12 diametral eingesetzt, die eine bestimmte lagemäßige Zuordnung zu den Durchbrüchen 5b des Innenzylinders 5 haben. Sie liegen innerhalb der mit zwei diametralen Durchbrüchen 5b fluchtenden Ebenen, so daß der Innenzylinder 5 auf den Stützring 6, 6' aufgeschoben werden kann, ohne daß der Innenzylinder an den Anschlagstiften 12 anstößt. Andererseits liegen diese Anschlagstifte soweit am Rande dieser Fluchtebenen, daß sie den Verstellwinkel des drehbaren Innenzylinders 5 begrenzen. In der Fig. 1 dargestellten Verriegelungslage des Bajonettverschlusses begrenzen die Anschlagstifte 12 die Drehung des Innenzylinders 5 im Uhrzeigersinn, da sie gegen eine Seitenfläche jeweils eines Stützteils 5a des Innenzylinders anstoßen. Zum Entriegeln wird der Innenzylinder 5 im Gegenuhrzeigersinn gedreht, bis die Anschlagstifte 12 an benachbarten Stützflächen 5a Anschlag finden. Auf diese Weise ist der Verstellwinkel des Innenzylinders 5 begrenzt, wodurch sowohl die Verriegelungslage als auch die Entriegelungslage des Innenzylinders 5 definiert ist.

Die vorgegebene Ringnut 4 des Walzenzapfens 2 wird ausgenutzt, um das Stützteil eines Bajonettverschlusses festzulegen. Dieses Stützteil besteht nach Fig. 1 aus zwei Stützringhälften 6 und 6', die mit umfangsverteilten radial vorspringenden Stützflächen 6a und 6a' versehen sind. Die Teilungsebene T verläuft durch diametrale Stützflächen 6a und 6a' von jeweils dem halben Bogenmaß gegenüber den beiden anderen, ungeteilten Stützflächen 6a und 6a', um auf einfache Art und Weise platzsparend Schrauben 8 oder andere Verbindungsmittel vorsehen zu können, mit deren Hilfe die beiden Stützringhälften 6, 6' in der Ringnut 4 des Wellenzapfens 2 zu einem geschlossenen Stützring des Bajonettverschlusses vereinigt werden.

Da die Teilungsebene T in Fig. 1 nur bis zum Mittelpunkt eingezeichnet ist und in diesem oberen Bereich mit der Schnittlinie II–II identisch ist, sind in der oberen Hälfte von Fig. 2 eine halbe Stützfläche 6a und die ebenfalls durch die Teilungsebene T aufgeschnittene innere Ringbundhälfte 6c der Stützringhälfte 6 in der Ansicht auf die Trennflächen dargestellt. Um einen geschlossenen Stützring in Fig. 2 hervorzuheben, sind in der unteren Hälfte eine Stützringhälfte 6a und die angeformte Ringbundhälfte 6c schraffiert dargestellt, obwohl die Schnittlinie II–II nur den in Wirklage eingesetzten Sicherungskeil 14 mit Abkröpfung 14a schneidet, da sie durch einen der Durchbrüche 5b des Innenzylinders 5 und nicht auch durch die Stützfläche 6a mit Ringbundhälfte 6c verläuft. Auf die Bedeutung des Sicherungskeils 14 wird später eingegangen.

Das auf dem Walzenzapfen 2 festzulegende Teil, der Innenzylinder 5, ist ein geschlossenes Ringteil mit nach innen gerichteten umfangsverteilten Stützflächen 5a, von denen eine Stützfläche in Fig. 1 durch eine Schraffur entlang des Umrisses verdeutlicht ist. Zwischen diesen Stützflächen 5a befinden sich Durchbrüche 5b, die den Durchbrüchen 6b der Stützringhälften 6 und 6' entsprechen. Der Innenzylinder 5 kann also in einer Drehlage, in der dessen Stützflächen 5a mit den Durchbrüchen 6b des zusammengesetzten Stützringes 6, 6' korrespondieren, axial bis über den Walzenzapfen 2 verschoben werden, um dann durch eine Drehung die Verriegelung mit dem feststehenden Stützteil herbeizuführen. In der Verriegelungslage sind die Stützflächen 5a des Innenzylinders 5 hinter die Stützflächen 6a, 6a' des zusammengesetzten Stützteils 6, 6' getreten, wie Fig. 1 zeigt.

Um die in Fig. 1 dargestellte Verriegelungslage des Bajonettverschlusses zu sichern, wir in zwei korrespondierende fluchtende Durchbrüche ein Sicherungskeil 14 eingesetzt, der durch eine den Spannring 7 durchgreifende Schraube 15 an dem Ringkolben 6 festgelegt wird. Der Sicherungskeil 14 durchgreift mit einer Abkröpfung 14a nicht nur den geteilten Stützring 6, 6', sondern greift letztlich auch zwischen zwei benachbarte Stützflächen 5a des Innenzylinders 5.

Die Innenabmessungen der Stützringhälften 6, 6' entsprechen im Bereich der Stützflächen 6a, 6a' dem Außendurchmesser D₃ des Ringbundes 3 des Walzenzapfens 2. Der Innendurchmesser der Ringnutenhälften 6c, 6c' entspricht dem Außendurchmesser D₄ der Ringnut 4 des Walzenzapfens 2.

## Patentansprüche

1. Wellenzapfen mit Bajonettverschluß zum axialen Festlegen von Ringteilen auf dem Wellenzapfen, insbesondere zum Festlegen des Innenzylinders einer hydraulischen Abziehvorrrichtung für Walzenlager auf dem Walzenzapfen, dadurch gekennzeichnet, daß das feststehende, mit umfangsverteilt abwechselnden Durchbrüchen (6b) und Stützflächen (6a, 6a') versehene Stützteil (6, 6') des Bajonettverschlusses aus zwei durch Verbindungselemente, z.B. Schrauben (8), verbindbaren Stützringhälften (6, 6') besteht, die innere Ringbundhälften (6c, 6c') aufweisen, die in eine Ringnut (4) des Wellenzapfens (2) eingreifen, daß mindestens eine der Stützringhälften über eine Verdrehsicherung drehfest mit dem Wellenzapfen (2) verbunden ist, und daß das festzulegende, mit korrespondierenden umfangsverteilt abwechselnden Stützflächen (5a) und Durchbrüchen (5b) versehene Ringteil (5) das drehbare Teil des Bajonettenverschlusses ist.

2. Wellenzapfen mit Bajonettverschluß nach Anspruch 1, dadurch gekennzeichnet, daß die Teilungsebene (T) des zusammengesetzten Stützringes (6, 6' durch zwei Stützflächen (6a, 6a') verläuft.

3. Wellenzapfen mit Bajonettverschluß nach Anspruch 2, dadurch gekennzeichnet, daß die Stützflächen (6a, 6a') eine größere axiale Abmessung haben als die Ringbundhälften (6c, 6c').

4. Wellenzapfen mit Bajonettverschluß nach Anspruch 1, dadurch gekennzeichnet, daß auf dem dem festzulegenden Ringteil (5) zugeordneten Bereich des Wellenzapfens (2) mindestens ein radialer Anschlagstift (12) eingesetzt ist, der einem der Durchbrüche (5b) des drehbaren Teils des Bajonettverschlusses lagemäßig zugeordnet ist derart, daß der von der Anzahl der vorgesehenen korrespondierenden Durchbrüche und Stützflächen abhängige Verstellwinkel des drehbaren Teils begrenzt ist.

## Claims

1. Shaft pin with bayonet closure for the axial fixing of annular parts on the shaft pin, especially for the fixing of the inner cylinder of a hydraulic withdrawal device for roller bearing on the roller pin, characterised thereby, that the stationary support part (6, 6'), provided with circumferentially distributed openings (6b) and support surfaces (6a, 6a') in alternation, of the bayonet closure consists of two support ring halves (6, 6') connectible by connecting elements, e.g. screws (8), which have inner annular collar halves (6, 6c') which engage in an annular groove (4) of the shaft pin (2), that at least one of the support ring halves is connected rationally fast with the shaft pin (2) by way of a torsional securing, and that the annular part (5) to be fixed, provided with corresponding circumferentially distributed support surfaces (5a) and openings (5b) in alternation, is the rotatable part of the bayonet closure.

2. Shaft pin with bayonet closure according to claim 1, characterised thereby, that the dividing plane (T) of the assembled support ring (6, 6') runs through two support surfaces (6a, 6a').

3. Shaft pin with bayonet closure according to claim 2, characterised thereby, that the support surfaces (6a, 6a') have a greater axial dimension than the annular collar halves (6c, 6c').

4. Shaft pin with bayonet closure according to claim 1, characterised thereby that inserted on the region, associated with the annular part (5) to be fixed, of the shaft pin (2) is at least one radial abutment peg (12), which is associated according to position with one of the openings (5b) of the rotatable part of the bayonet closure in such a manner that the displacement angle, dependent on the number of the provided corresponding openings and support surfaces, of the rotatable part is limited.

## Revendications

1. Tourillon d'arbre comportant un dispositif de verrouillage à baïonnette pour la fixation dans le sens axial de pièces annulaires sur le tourillon d'arbre, notamment pour la fixation du cylindre intérieur d'un dispositif hydraulique d'extraction de paliers de cylindres sur le tourillon de cylindre, caractérisé en ce que la pièce d'appui fixe (6, 6') du dispositif de verrouillage à baïonnette, qui comporte à sa périphérie, alternativement, des ouvertures de passage (6b) et des surfaces d'appui (6a, 6a'), est constituée par deux moitiés de bague d'appui (6, 6') qui peuvent être assemblées par des élements de liaison, par exemple par des vis (8), et comportent des moitiés de bourrelet annulaire intérieures (6c, 6c') qui s'engagent dans un rainure annulaire (4) du tourillon d'arbre (2), en ce que l'une au moins des moitiés de bague d'appui est, par l'intermédiaire d'un dispositif empêchant toute rotation, reliée sans possibilité de rotation relative au tourillon d'arbre (2) et en ce que la pièce annulaire à fixer (5), qui comporte à sa périphérie, alternativement, des surfaces d'appui (5a) et des ouvertures de passage (5b) correspondantes, constitue la partie tournante du dispositif de verrouillage à baïonnette.

2. Tourillon d'arbre comportant un dispositif de verrouillage à baïonnette selon la revendication 1, caractérisé en ce que le plan de subdivision (T) de la bague d'appui (6, 6') réalisée par assemblage passe par deux surfaces d'appui (6, 6a').

3. Tourillon d'arbre comportant un dispositif de verrouillage à baïonnette selon la revendication 2, caractérisé en ce que les surfaces d'appui (6a, 6a') ont, dans le sens axial, des dimensions supérieures à celles des moitiés de bourrelet annulaire (6c, 6c').

4. Tourillon d'arbre comportant un dispositif de verrouillage à baïonnette selon la revendication 1, caractérisé en ce que, dans la zone du tourillon d'arbre (2) qui correspond à la pièce annulaire à fixer (5), une cheville de butée (12) au moins, engagée dans le sens radial, est placée, par rapport à l'une des ouvertures de passage (5b) de la partie tournante du dispositif de verrouillage à baïonnette, de telle manière que le déplacement angulaire de la partie tournante, qui dépend du nombre des ouvertures de passage et des surfaces d'appui correspondantes, est limité.

Fig. 1

Fig. 2